(19) **Europäisches Patentamt / European Patent Office / Office européen des brevets**

(11) **EP 3 297 433 B1**

(12) # EUROPEAN PATENT SPECIFICATION

(45) Date of publication and mention of the grant of the patent:
**23.06.2021 Bulletin 2021/25**

(51) Int Cl.:
*A01N 25/08* (2006.01)   *A01N 59/14* (2006.01)
*A01N 59/16* (2006.01)   *A01N 59/20* (2006.01)
*A01N 65/00* (2009.01)   *A01N 65/22* (2009.01)
*A01N 65/28* (2009.01)   *A01N 65/48* (2009.01)

(21) Application number: **16733692.4**

(22) Date of filing: **17.05.2016**

(86) International application number:
**PCT/IB2016/052861**

(87) International publication number:
**WO 2016/185379 (24.11.2016 Gazette 2016/47)**

(54) **USE OF HYDROXYAPATITE AS A CARRIER OF NUTRITIONAL ELEMENTS AND VEGETAL EXTRACTS FOR TREATING PLANTS**

VERWENDUNG VON HYDROXYLAPATIT ALS TRÄGER VON NAHRUNGSELEMENTEN UND PFLANZLICHEN EXTRAKTEN ZUR BEHANDLUNG VON PFLANZEN

UTILISATION DE L'HYDROXYAPATITE COMME SUPPORT D'ÉLÉMENTS NUTRITIONNELS ET D'EXTRAITS VÉGÉTAUX POUR TRAITER LES PLANTES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.05.2015 IT UB20150805**

(43) Date of publication of application:
**28.03.2018 Bulletin 2018/13**

(73) Proprietor: **NDG Natural Development Group S.r.l.**
**40013 Castel Maggiore (BO) (IT)**

(72) Inventors:
- **MANFREDINI, Gianluca**
  **40013 Castel Maggiore (Bologna) (IT)**
- **PIVA, Massimo**
  **40013 Castel Maggiore (Bologna) (IT)**
- **COLETTI, Matteo**
  **Moscow 119415 (RU)**
- **BATTISTON, Enrico**
  **33024 Musile Di Piave (venezia) (IT)**

(74) Representative: **Masala, Gian Tomaso**
**Notarbartolo & Gervasi S.p.A.**
**Viale Achille Papa, 30**
**20149 Milano (IT)**

(56) References cited:
**EP-A1- 0 640 284    WO-A1-03/065810**
**WO-A1-2007/137606    RO-B1- 122 830**

- MAYER I ET AL: "Zinc ions in synthetic carbonated hydroxyapatites", ARCHIVES OF ORAL BIOLOGY, PERGAMON PRESS, OXFORD, GB, vol. 39, no. 1, 1 January 1994 (1994-01-01), pages 87-90, XP026167604, ISSN: 0003-9969, DOI: 10.1016/0003-9969(94)90040-X [retrieved on 1994-01-01]
- STANIC V ET AL: "Synthesis, characterization and antimicrobial activity of copper and zinc-doped hydroxyapatite nanopowders", APPLIED SURFACE SCIENCE, ELSEVIER, AMSTERDAM, NL, vol. 256, no. 20, 1 August 2010 (2010-08-01), pages 6083-6089, XP027076744, ISSN: 0169-4332, DOI: 10.1016/J.APSUSC.2010.03.124 [retrieved on 2010-06-04]
- ATSUMI K ET AL: "Antimicrobial soil material for plants - comprises carrier of sheet, mat, sponge or activated charcoal fibre with antimicrobial ceramics contg. metal ion", WPI / THOMSON,, vol. 1992, no. 13, 17 February 1992 (1992-02-17), XP002727010, cited in the application

- **DAFERERA D J ET AL: "The effectiveness of plant essential oils on the growth of Botrytis cinerea, Fusarium sp. and Clavibacter michiganensis subsp. michiganensis", CROP PROTECTION, ELSEVIER SCIENCE, GB, vol. 22, 1 January 2003 (2003-01-01), pages 39-44, XP002323189, ISSN: 0261-2194, DOI: 10.1016/S0261-2194(02)00095-9**

Remarks:

The file contains technical information submitted after the application was filed and not included in this specification

**Description**

FIELD OF THE INVENTION

The present invention relates to the use of a carbonate-substituted hydroxyapatite in combination with at least one bioactive substance, in particular vegetal extracts and/or nutritional elements, for the phytosanitary and/or nutritional treatment of plants, preferably grapevines.

BACKGROUND ART

In agriculture, there is a precarious balance between biotic agents such as fungi, bacteria, phytoplasma, viruses and parasites and the actual defences of the plant in question.

In fact, plants generally have a resistance called pre-infection resistance in the sense that they have physical barriers, like their membrane walls, or chemical barriers obtained by the production and diffusion of antimicrobial substances. Plant resistance can be sufficient by itself and thus not require any treatment.

However, certain pathogens bring about an imbalance and plants are no longer able to defend themselves with their own mechanisms.

In order to help the plant natural defences to fight against diseases, the delivery of nutritional elements is becoming an essential part of the plant protection strategy, aiming at keeping the plant in the best nutrition balance, fundamental prerogative to prevent any disease development. Potassium is a key element, through the potassium/nitrogen ratio, in the reduction of fungal diseases, such as botrytis, in grapevine. When leaf nitrogen levels are high, plant growth increases and the concentration of plant exudates (e.g. sugar and amino acids) in the fruit rises. The combination with low potassium-levels (N/K ratio over 2.5) stimulates spreading of the disease on leaves and fruit. Magnesium sustains the healthy growth and development of crop. Magnesium is a constituent of the structural tissues and is involved in physiological functions and biochemical processes. Application of magnesium fertilizers resulted in decrease of bunch stem necrosis. Iron takes part to important metabolic activities during respiration, DNA synthesis and photosynthesis. All these processes play major roles in the disease defence systems of crop. Manganese can provide opportunity for direct and indirect effects on defence mechanism of crop, being involved in the metabolism of carbohydrate and nitrate. Molybdenum is involved in synthesis or regulation of hormones and its deficiency limits the growth of crop. Boron contribution in lignification and phenol metabolism reveals its benefit in the crop defence mechanism against diseases.

Next to this approach, the application of extracts of vegetal origin, also known as "botanicals", is included among the sustainable strategies of plant protection.

Many vegetal extracts show a broad spectrum of activity against pest insects and plant pathogenic fungi ranging from insecticidal, antifeedant, repellent, oviposition deterrent, growth regulatory and antivector activities.

Vegetal extracts are a mixture of natural substances derived from various parts of plants, mainly seeds, but also fruits (olive) and other parts of plants (e.g. leaves). They are a very heterogeneous group of products of natural origin, in the form of hygroscopic powder, alcoholic and hydro-alcoholic solution. Some vegetal substances were included in Annex I of Directive 91/414/EEC with specific provisions (Directive 2008/127/EC): rapeseed extract as insecticide and acaricide, citronella extract as herbicide, and melaleuca alternifolia (tea tree extract) as fungicide.

Other edible vegetable extracts (peanut, safflower, cotton, sunflower, flax, corn, olive, coconut palm, mustard, sesame, soy and grape seed) that should result from mechanical extraction and be handled exclusively by physical processes were not included in Annex I and in Italy they can be used as biostimulants, plant strengthener and enhancers of the natural defences of plants (DL 55/2012).

In the fields of plant protection and phytosanitary treatment of plants, there is still the need of improving the delivery (and thus the bioavailability) of vegetal extracts and nutritional elements to plants, with the aim to safeguard plant health while, at the same time, reducing the administration doses of such extracts, which are valuable substances from an economic point of view.

Hydroxyapatite is well known in the prior art in different forms and for different applications. For example, synthetic hydroxyapatite constitutes an excellent biomaterial for biomedical applications, notably for bone reconstruction.

Hydroxyapatite and synthetic substituted hydroxyapatite can be produced by different processes, by wet, hydrothermal, electrochemical, sol-gel or solid state synthesis. It can be found in different stoichiometric, morphological and crystalline forms.

Carriers of stoichiometric hydroxyapatite are known from JPH0556105 which describes the use of hydroxyapatite as a carrier for an antimicrobial metal ion selected from silver, copper and zinc to sterilize a soil from the presence of the plant pathogenic fungus Pythium. The action of the antimicrobial metal ion is limited to the soil since the publication specify that the agent is hardly absorbed into the plant.

EP0640284 describes an antimicrobial sand coated with a stoichiometric hydroxyapatite carrier containing antimicrobial agents, such as silver, copper or zinc ions. The antimicrobial sand is mixed with the soil used to grow flowering plants, such as orchids, cyclamen etc., to sterilize the soil against the fungi: Rhizoctonia, Fusarium, Sclerotinia and Pyshium.

RO 122830 describes a fungicide composition, based on salts of N,N-ethylene-bis-thiocarbamic acid, characterized by the fact that it consists of 40-50% zinc N,N-ethylene-bis-thiocarbamate or a mixture thereof with the manganese salt or manganese and iron salt, 30-50% hydroxyapatite, 1,5-3% $SiO_2$ and 20-50% potassium acetate.

Prior art JPH0556105 and EP 0 640 284 does not describe the use of substituted hydroxyapatite as a carrier of active principles. Prior art does not describe the use of hydroxyapatite as carrier of active substances for the treatment of plant pathologies by application of the carrier on the plant. Prior art teaches only a way to sterilize the soil used to grow the plants, in particular flowering plants (not crops).

Prior art RO 122830 does not describe hydroxyapatite as carrier of nutritional elements, such as K, Mg, Fe, Mn, Mo, B and Se and/or as carrier of vegetal extracts, nor that hydroxyapatite can be substituted with metal ions in the Ca, $PO_4$ and/or OH ion positions.

## SUMMARY OF THE INVENTION

With respect to the known use of stoichiometric hydroxyapatite (i.e. hydroxyapatite base on calcium-phosphate ions not substituted by other ions), having the formula:

$$Ca_{10}(PO_4)_6(OH)_2$$

as a carrier of metal ions for sterilizing soil used to grow plants, the present invention provides the use of carbonate-substituted hydroxyapatite having the following formula:

$$Ca_{(10)}(PO_4)_{(6-y)}(CO_3)_y(OH)_2$$

wherein y is comprised between 0.002 and 2, loaded with bioactive substances chosen among metal ions such as Mn, Mg, K, Fe, B (acting as fertilizers and nutritional elements), and extracts of vegetal origin, such as extracts of: lignin, mint, thyme, rosemary, sesame, soya, cloves, garlic, lemon, cinnamon, *Abies sibirica, Malpighia glabra, Achillea millefolium. Allium sativum, Medicago sativa, Aloe vera Citrus sinensis, Artemisia annua, Arnica Montana, Ocimum basilicum, Betula pendula, Betula pubescens, Calendula officinalis, Matricaria chamomilla, Chamaemelum nobile, Cinnamomum verum, Centella asiatica, Chelidonium majus, Syzygium aromaticum, Allium cepa, Equisetum arvense, Curcuma longa, Echinacea purpurea, Echinacea angustifolia, Eucalyptus globulus, Hypericum perforatum, Fucus vesiculosus, Gentiana lutea, Lavandula angustifolia, Citrus limon, Melilotus officinalis, Melissa officinalis, Punica granatum, Mentha piperita, Vaccinium myrtillus, Orthosiphon stamineus, Urtica dioica, Olea europeae, Tabebuia impetiginosa, Plantago lanceolata, Hieracium pilosella, Pinus sibirica, Polypodium leucotoms, Citrus paradise, Quassia amara, Rheum Thais, Rosa canina, Rosmarinus officinalis, Ruscus aculeatus, Salix alba, Salvia officinalis, Camelia sinensis, Tilia tomentosa, Thymus vulgaris, Arctostaphylos uva-ursi, Valeriana officinalis, Solidago virgaurea, Loranthus europaeus, Zingiber officinale.*

The vegetal extracts can have both nutritional activity and mild anti-parasite activity.

The invention provides also for the use of the carbonate-substituted hydroxyapatite loaded with a mixture of the vegetal extracts listed above or a mixture of metal ions listed above or a mixture of metal ions and vegetal extracts.

The invention also provides for the use of a composition of the carbonate-substituted hydroxyapatite of the invention and one or more bioactive substances according to the invention for treating plants.

The use of the carbonate-substituted hydroxyapatite loaded with at least one bioactive substance according to the invention is intended for treating plants, preferably for the phytosanitary and/or nutritional treatment of plants, in particular of the grapevines. Other plants that can be treated according to the invention are: tomato plant (Solanum lycopersicum), wheat (Triticum spp), pear tree (Pyrus spp), apple tree (Malus domestica), olive tree (Olea europaea), kiwifruit (Actinia spp) and vegetable plants, such as lettuce, spinach, cucurbits (for example cantaloupe, cucumber, pumpkin, squash and watermelon), onion, leek, peas.

The carbonate substitution is in the phosphate site of hydroxyapatite (site B).

According to the present invention, the hydroxyapatite used as carrier of bioactive substances for the treatment of plants, is hydroxyapatite substituted with at least one carbonate ion and no further metal ions.

The carbonate-substituted hydroxyapatite loaded with at least one bioactive substance is applied on the plants and penetrates into the plants through natural openings, as explained in details below, thus realizing an intimate contact with the pathogen cells that can be present both on the plant surface or inside the plant.

The carbonate-substituted hydroxyapatite loaded with at least one bioactive substance is used for treating plants according to the invention.

The carbonate substitution has the advantage to lower the crystallinity degree of hydroxyapatite, which thus becomes more amorphous. The amorphous state leads to an increase of solubility of the carbonate-substituted hydroxyapatite in a biological environment, with the advantage that the bioactive substances release is improved and becomes more effective. Thus, lower doses of bioactive substances can be used with respect to the administration of a bioactive substance without the hydroxyapatite carrier. The carbonate-substituted hydroxyapatite having the above characteristics, comprises a bioactive substance adsorbed thereto, thus yielding a carbonate-substituted hydroxyapatite loaded with at least one active substance.

BRIEF DESCRIPTION OF THE DRAWINGS

Figures 1 to 4 show the results of the tests included in the section "examples A":

Figure 1 shows the results of the first laboratory test on Agrobacterium vitis.
Figure 2 shows the results of the second laboratory test on Agrobacterium vitis.
Figure 3 shows the results of the first laboratory test on Botrytis cinerea.
Figure 4 shows the results of the second laboratory test on Botrytis cinerea.

Figures 5 to 8 show the results of the tests included in the section "examples B":

Figures 5A-D show the results of the laboratory test on Botrytis cinerea.
Figures 6A-D show the results of the laboratory test on Phaeomoniella chlamydospora.
Figure 7A-D show the results of the laboratory test on Phaeoacremonium aleophilum.
Figure 8A-B shows the results of the greenhouse test on Plasmopara viticola.

DETAILED DESCRIPTION OF THE INVENTION

With "substituted hydroxyapatite" in the present invention, it is intended to refer to hydroxyapatite of the formula $Ca_{10}(PO_4)_6(OH)_2$ in which the Ca, $PO_4$ and/or OH ions are replaced, in the crystal lattice of hydroxyapatite, with one or more ions of the same or different species.

For the scope of the present invention, "hydroxyapatite functionalized with a bioactive substance" is a definition equivalent to say that the bioactive-substance is "adsorbed" or "loaded" on the hydroxyapatite and also equivalent to say that hydroxyapatite is a carrier of bioactive substances.

With "vegetal extract" in the present invention it is intended to refer to a mixture of natural substances derived from the mechanical or chemical treatment of various parts of plants, mainly seeds, but also fruits (in particular peel or skin of the fruits) and other parts of plants (e.g. leaves). The vegetal extracts according to the invention are preferably prepared using a chemical method of treating seeds, flower, leaves, fruits (in particular the peel or skin of the fruits) (or other parts of the plants) with an alcoholic and/or hydro-alcoholic solution and then removing the solvent to obtain a hygroscopic powder. The vegetal extracts of the invention can be used either in the form of a powder or in the form of an alcoholic or hydro-alcoholic solution.

With "bioactive substance" in the present invention it is intended to refer to substances that have a nutritional activity and/or a phytosanitary activity. For "phytosanitary treatment" or "phytosanitary activity" it is intended the treatment or prevention of plant diseases caused by parasites such as cryptogams, bacteria, fungi, phytoplasma and insects.

For "nutritional treatment" or "nutritional activity" it is intended to refer to bioactive substances that help the development of the plant natural defences (and thus help plants to fight against diseases), keeping the plant in the best nutrition balance, fundamental prerogative to prevent any disease development.

The bioactive substance used in the invention can have both a phytosanitary activity and a nutritional activity and thus can be used for both phytosanitary and nutritional treatment of the plants, depending on the dosage of use.

The present invention relates to the use of carbonate-substituted hydroxyapatite loaded with a bioactive substance for the phytosanitary treatment and/or nutritional treatment of plants, in particular of grapevines. The invention is suitable for treating all types of plants, particularly for treating grapevines. Other plants that can be treated according to the invention are: tomato plant (Solanum lycopersicum), wheat (Triticum spp), pear tree (Pyrus spp), apple tree (Malus domestica), olive tree (Olea europaea), kiwifruit (Actinia spp) and vegetable plants, such as lettuce, spinach, cucurbits (for example cantaloupe, cucumber, pumpkin, squash and watermelon), onion, leek, peas.

Preferred diseases treated with the product of the invention are: downy mildew (caused by Plasmopara viticola), powdery mildew (caused by Erysiphe nectar), grey mould (caused by Botrytis cinerea), black rot (caused by Guignardia bidwellii), grapevine crown gall (caused by Agrobacterium vitis), grapevine trunk diseases or esca (caused by Botryosphaeriaceae, Phaeomoniella chlamydospora, Phaeoacremonium aleophilum, Fomitiporia mediterranea) late blight of tomatoes (caused by Phytophthora infestans), fusarium head blight of wheat (caused by Fusarium graminearum and Fusarium culmorum), apple scab (caused by Venturia inaequalis), pear scab (caused by Venturia pirina), brown spot of pear (caused by Stemphylium vesicarium), Lettuce mildew (caused by Bremia lactucae), Spinach mildew (caused by Peronospora spinaceae), Cucurbits mildew (caused by Pseudoperonospora cubensis on cantaloupe, cucumber, pumpkin, squash and watermelon), Onion mildew (caused by Peronospora schleideni), Leek mildew (caused by Phytophtora porri), Peas mildew (caused by Peronospora pisi), diseases caused by the insects: European grapevine moths (Eupoecilia ambiguella) and vine mealybug (Planococcus ficus).

The hydroxyapatite of the invention is substituted by at least one carbonate ion (and no other metal ion), and has the following formula:

$$Ca_{(10)}(PO_4)_{(6-y)}(CO_3)_y(OH)_2$$

wherein y is comprised between 0.002 and 2.

The carbonate substitution can occupy site B ($PO_4^{3-}$ phosphate ions) as per general formulae above.

In the hydroxyapatite structures considered in the present invention, the substitution is on site B, with a percentage of carbonate occupying the B site that is greater than or equal to 55% in weight, even more preferably comprised between 90 and 100% in weight of the total weight of carbonate contained in the hydroxyapatite.

The overall content of carbonate in the hydroxyapatite according to the invention can be from 1 to 20%, preferably from 5 to 15% in weight of the total hydroxyapatite structure.

The carbonate ion, at site B, is very significant since it allows the whole hydroxyapatite structure to increase its solubility in a biological environment.

According to a preferred embodiment the above carbonate-substituted hydroxyapatite has a crystallinity degree comprised between 25 and 75%, preferably between 25 and 40%.

Preferably, the carbonate-substituted hydroxyapatite is in the form of particles smaller than 2 $\mu$m, preferably sized between 0.2 and 0.9 $\mu$m. The carbonate-substituted hydroxyapatite particles are preferably joined together to create aggregates of carbonate-substituted hydroxyapatite particles (also referred to in this application as "clusters" or "crystals" or "microcrystals" or "microcrystalline aggregates", all these terms having the same meaning as "aggregates" according to the invention). These aggregates have micrometric dimensions, with a size comprised between 0.5 and 25 $\mu$m, more particularly between 0.5 and 5 $\mu$m and having a significant surface area. In particular, carbonate-substituted hydroxyapatite aggregates useful according to the present invention have a surface area comprised between 60 and 120 m$^2$/g, more particularly between 70 and 90 m$^2$/g.

The aggregates of carbonate-substituted hydroxyapatite have the advantage of a larger surface area with respect to single carbonate-substituted hydroxyapatite particles and therefore allows adsorbing more bioactive substances and controlling the release of them in the environment. Thus for a small quantity of carbonate-substituted hydroxyapatite it is possible to transport a significant number of bioactive substances which allows the activity and biological effectiveness of the substances to be increased further.

The bioactive substances adsorbed on the carbonate-substituted hydroxyapatite of the invention are chosen among metal ions such as Mn, Mg, K, Fe, B (acting as fertilizers and nutritional elements), and extracts of vegetal origin, such as extracts of: lignin, mint, thyme, rosemary, sesame, soya, *cloves, garlic, lemon, cinnamon, Abies sibirica, Malpighia glabra, Achillea millefolium. Allium sativum, Medicago sativa, Aloe vera Citrus sinensis, Artemisia annua, Arnica Montana, Ocimum basilicum, Betula pendula, Betula pubescens, Calendula officinalis, Matricaria chamomilla, Chamaemelum nobile, Cinnamomum verum, Centella asiatica, Chelidonium majus, Syzygium aromaticum, Allium cepa, Equisetum arvense, Curcuma longa, Echinacea purpurea, Echinacea angustifolia, Eucalyptus globulus, Hypericum perforatum, Fucus vesiculosus, Gentiana lutea, Lavandula angustifolia, Citrus limon, Melilotus officinalis, Melissa officinalis, Punica granatum, Mentha piperita, Vaccinium myrtillus, Orthosiphon stamineus, Urtica dioica, Olea europeae, Tabebuia impetiginosa, Plantago lanceolata, Hieracium pilosella, Pinus sibirica, Polypodium leucotoms, Citrus paradise, Quassia amara, Rheum Thais, Rosa canina, Rosmarinus officinalis, Ruscus aculeatus, Salix alba, Salvia officinalis, Camelia sinensis, Tilia tomentosa, Thymus vulgaris, Arctostaphylos uva-ursi, Valeriana officinalis, Solidago virgaurea, Loranthus europaeus, Zingiber officinale.*

The vegetal extracts can have both nutritional activity and mild anti-parasite activity.

The bioactive molecules are adsorbed on to the carbonate-substituted hydroxyapatite, thus obtaining a carbonate-substituted hydroxyapatite loaded with at least one active substance.

The absorption of such substances on carbonate-substituted hydroxyapatite can be performed by all processes known to a person skilled in the art. The crystallised carbonate-substituted hydroxyapatite aggregate has an inner zone that is purely crystalline and an outer peripheral zone with electrical charges that are not completely neutral, which allows the bioactive substances to be retained.

In the case of adsorption of Mn, Mg, K, Fe, B on carbonate-substituted hydroxyapatite, the adsorption can be obtained:

- for Mn starting from: Manganese sulfate.
- for Mg starting from: Magnesium sulfate. Magnesium oxide,
- for K starting from: Potassium chloride, Potassium sulfate .
- for Fe starting from: Iron sulfate .
- for B starting from: Boric acid.

For the use according to the invention, the carbonate-substituted hydroxyapatite loaded with at least one bioactive substance is preferably integrated into a composition, preferably in the form of microcrystalline aggregates. This composition may be in all forms, notably powder, granules, liquid or gel. According to a preferred embodiment, aggregates of carbonate-substituted hydroxyapatite are dispersed in a uniform way in water. The pH of the composition in liquid form is preferably greater than 5 so as to prevent that the microcrystals of carbonate-substituted hydroxyapatite undergo partial or total hydrolysis.

Such a liquid composition allows foliar application, in particular by spraying. The structure and micrometric size of the hydroxyapatite crystals allows uniform dispersion of carbonate-substituted hydroxyapatite crystals within the volume of the micronised droplets during spraying, thus allowing good distribution throughout the total volume used for application and consequently more uniform distribution on the application surface. According to the type of atomiser used for the application of carbonate-substituted hydroxyapatite, it is possible to have droplets whose diameter varies between 50 and 800 $\mu$m. In order to avoid or limit drifting of very small droplets and discharge of very large droplets, and to guarantee better application on the surface to be treated, it is possible to use spraying means that allow droplets sized between 150 and 250 $\mu$m to be obtained.

Once applied, the aggregated particles adhere to the leaf without needing to use anti-stripping agents in the composition. In fact, according to their surface, their size, their morphological irregularities and their electrostatic characteristics, the carbonate-substituted hydroxyapatite crystals cling onto the surface of the leaves, thus ensuring optimal adhesion resistance to run off water, unlike currently existing products that are carried away by rain or dew.

The use of the compositions, applied per hectare, is to be adapted according to the climatic conditions encountered, the season and the protection and nutrition strategies of the soil. By way of example for a vineyard, a suitable example of use corresponds to a quantity of water used in the order of 250 l/ha for fully developed plants, with a density in the order of 4000 stumps/ha, in variable concentration, formulated from 2.5 to 5% in particles of carbonate-substituted hydroxyapatite in weight in relation to the total weight of the liquid composition.

Once applied to the plant, the bioactive molecules may be directly released or the carbonate-substituted hydroxyapatite microcrystals may transport these substances into the intercellular spaces. Bioactive molecules are thus released by hydrolysis, in proximity to targets, in particular in proximity to target parasites such as fungi and bacteria.

In fact, the microcrystalline aggregates of carbonate-substituted hydroxyapatite penetrate into the plant according to passive diffusion following the discharge of fluids, such as carbon dioxide and water, through the natural openings of the plant tissues. Inside the plant, the carbonate-substituted hydroxyapatite behaves like a "sol-gel": it is not stagnant in a liquid medium, it moves in the xylem and the phloem by following the circulating lymph. Hence there is no risk of accumulation in the plant. When the carbonate-substituted hydroxyapatite meets a pathogen, the aggregate decomposes as the more acidic wall of the microorganism promotes dissolution and the release of bioactive substances, which can therefore act against the pathogen.

The bioactive molecules (for example, phosphorus, calcium and carbonate) follow the lymphatic flow and exercise their activity in particular as fertilisers for improving the development of the plant and/or reinforcing its natural defences. Unlike the conventional methods, there is therefore no action on the intracellular metabolic pathways, but a contact action between the functional elements of the hydroxyapatite aggregates and the pathogens on an intercellular level or at the surface of the plants.

The bioactive substances can therefore act when they are sprayed onto the surface but also in depth into the core of the plant tissues treated.

The carbonate-substituted hydroxyapatite loaded with at least one bioactive substance can also be used for application on the trunk, on the wood of plants or on their roots according to the aim of the application.

The carbonate-substituted hydroxyapatite particles are loaded with at least one bioactive substance. In other words, the carbonate-substituted hydroxyapatite particles (or aggregates) comprise bioactive substances adsorbed thereto. The bioactive substances are those listed above.

Aggregates of carbonate-substituted hydroxyapatite particles have a size comprised between 0,5 and 25 $\mu$m, preferably comprised between 0,5 and 5 $\mu$m.

A composition comprising at least one carbonate-substituted hydroxyapatite particle or at least one aggregate of carbonate-substituted hydroxyapatite particles according to the invention is loaded with bioactive substances. Preferably, such a composition comprises between 5 and 70% in weight of carbonate-substituted hydroxyapatite particles and/or aggregates in relation to the total weight of the dry material of the composition, even more preferably between 6 and 60%.

The invention is now illustrated by manufacturing process examples, composition examples and uses examples.

Manufacturing example 1

The carbonate-substituted hydroxyapatite is synthesised by mixing phosphoric acid with a composition comprising calcium hydroxide and calcium carbonate previously dispersed in a suitable quantity of water.

The reaction requires about 12 to 48 hours, more particularly about 15 to 30 hours. Following the suspension of microcrystals a suspension of vegetal extracts such as extracts of mint, thyme, rosemary, cloves, cinnamon, lemon and garlic is added, previously dissolved in a suitable quantity of water.

Once these two solutions are combined, they are mixed to allow adsorption of vegetal extracts in the carbonate-substituted hydroxyapatite.

The of the copper solution takes about 12 to 72 hours, more particularly from 24 to 60 hours.

Manufacturing example 2

The carbonate-substituted hydroxyapatite is synthesised by mixing phosphoric acid with a composition comprising calcium hydroxide and calcium carbonate, previously dispersed in a suitable quantity of water.

The reaction requires about 12 to 48 hours, more particularly about 15 to 30 hours. Following the suspension of microcrystals, a formulation of micro-elements such as boric acid and magnesium oxide is dispersed in a suitable volume of water is added.

Once these two solutions are combined, they are mixed to allow adsorption of the metal ions in the carbonate-substituted hydroxyapatite.

The reaction requires about 2 to 10 hours, more particularly about 4 to 6 hours.

Manufacturing example 3

The carbonate-substituted hydroxyapatite is synthesised by mixing phosphoric acid with a composition comprising calcium hydroxide and calcium carbonate, previously dispersed in a suitable quantity of water.

The reaction requires about 12 to 48 hours, more particularly about 15 to 30 hours. Following the suspension of microcrystals, a suspension of vegetal extracts such as the alcoholic or hydro alcoholic extract (in form of hygroscopic powder) of *Citrus paradisi, Loranthus europaeus, Medicago sativa and Solidago virgaurea,* is dispersed in a suitable volume of water is added.

Once these two solutions are combined, they are mixed to allow adsorption of the extracts in the carbonate-substituted hydroxyapatite.

The reaction requires about 2 to 10 hours, more particularly about 4 to 6 hours.

Composition examples

A selenium based composition may comprise the following formulation:

- Selenium hydroxyapatite 10% (carbonate-substituted hydroxyapatite with selenium ions adsorbed thereto)
- Distilled water 83%
- Xanthan gum 1%
- Glycerine 4%
- Benzoic acid 2%

A Boron based composition may comprise the following formulation:

- Boron hydroxyapatite 10% (carbonate-substituted hydroxyapatite with boron ions adsorbed thereto)
- Distilled water 83,5%
- Xanthan gum 1%
- Glycerine 4%
- Benzoic acid 1.5%

A composition according to the invention may also be a composition comprising a mixture of the two compositions previously described.

Example of use

In order to optimise the functional properties and structural stability of the liquid compositions comprising the carbonate-substituted hydroxyapatite particles, a use can be implemented according to the following recommendations in particular:

- Shaking the composition before use to put the particles and/or aggregates of particles back in suspension in the composition;

- Using an atomiser that ensures complete and uniform wetting of the vegetation and prevents too low or too high volumes;

- Using quantities of water ranging from 60L/ha to 250L/ha on fully developed plants, avoiding excessive amounts of water which create run off;

- Reducing the amount of product per hectare in the event of manual application;

- Controlling the pH of the solution in water so that it is greater than 5.

**EXAMPLES A**

EXPERIMENTAL TESTS ON VINE DISEASES

| *LEGEND OF THE TESTED FORMULATIONS* All the formulations contain water, hydroxyapatite substituted with carbonate ions and/or copper and/or zinc, and loaded with ions (K, Mg, B, Mn) and/or vegetal extracts. | |
|---|---|
| *Code* | *Functional (F) or substituent (S) substances (g/kg formulation)* |
| *C1* | *Cu = 50 (S); Zn (S) = 18 ; mix of vegetal extracts = 30 (F)* |
| *C2* | *Vegetal extract of Lemon = 30 (F)* |
| *C3* | *Vegetal extract of Cloves = 30 (F)* |
| *C4* | *Vegetal extract of Peppermint = 30 (F)* |
| *C5* | *Vegetal extract of Thyme = 30 (F)* |
| *C6* | *Vegetal extract of Rosemary = 30 (F)* |
| *C7* | *Vegetal extract of Garlic = 30 (F)* |
| *C8* | *Vegetal extract of Cinnamon = 30 (F)* |
| *C9* | *mix of vegetal extracts = 30 (F)* |

1. INTRODUCTION

Several formulations based on hydroxyapatite substituted with carbonate ions and/or copper and/or zinc, and loaded with vegetal extracts were tested *in vitro* against grapevine pathogens.

2. GRAPEVINE CROWN GALL (Agrobacterium vitis)

The biological efficacy of the test agents was determined in terms of inhibition of the growth. To this aim 6 strains of Agrobacterium vitis from different growing areas worldwide, were grown in vitro. The strains of A. vitis, were inoculated on Petri dishes containing PDA (Potato Dextrose Agar), in the ratio of approximately 10 to 8 cells. After plating the bacteria, 5 holes (6 mm) were drilled in the substrate (one at the center of the plate and 4 equally spaced around the central hole). Each plate was filled with 20 microliters of test substance at the concentrations indicated; for each substance and concentration, 3 replies were set up. The central hole was filled with 20 microliters of sterile water, which represented the untreated control. The plates were incubated at 28°C, for 2-5 days.

After the expiration of the incubation period, for each tested strain and for each substance and concentration, the diameters of the inhibitory zones were considered (average of two orthogonal diameters of each inhibitory area). The collected data were subjected to analysis of variance ANOVA and comparison of averages with SNK test.

In the first test, the biological efficacies of the following treatments were compared:

- NT - Control (water): the growth was not inhibited.
- CA - Sodium Hypochlorite (3% v/v): the growth was completely inhibited.
- C1: the growth was inhibited by augmenting the % from 1 to 10, obtaining the most similar effect to the Control Agent.
- C9: the growth the growth was inhibited by augmenting the % from 1 to 10, obtaining the similar effect of C1. The highest concentration is not significantly different from the highest concentration of C1.

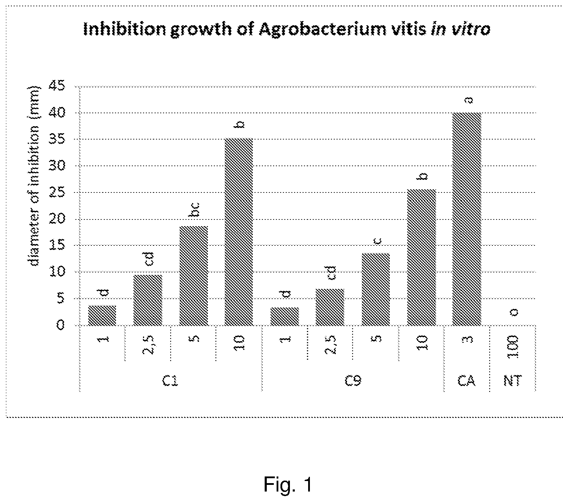

See **Fig. 1** for a schematic view of the results.

In the second test, the biological efficacies of the following treatments were compared:

- NT - Control (water): the growth was not inhibited.
- CA - Sodium Hypochlorite (3% v/v): the growth was completly inhibited.
- C2: the growth was inhibited by augmenting the % from 1 to 10. The highest concentration is not significantly different from the highest concentration of C3 and C7.
- C3: the growth the growth was inhibited by augmenting the % from 1 to 10. The highest concentration is not significantly different from the highest concentration of C3 and C7.
- C4: the growth the growth was inhibited by augmenting the % from 1 to 10.
- C5: the growth the growth was inhibited by augmenting the % from 1 to 10.
- C6: the growth the growth was inhibited by augmenting the % from 1 to 10.
- C7: the growth the growth was inhibited by augmenting the % from 1 to 10. The highest concentration is not significantly different from the highest concentration of C2 and C3.
- C8: the growth the growth was inhibited by augmenting the % from 1 to 10.

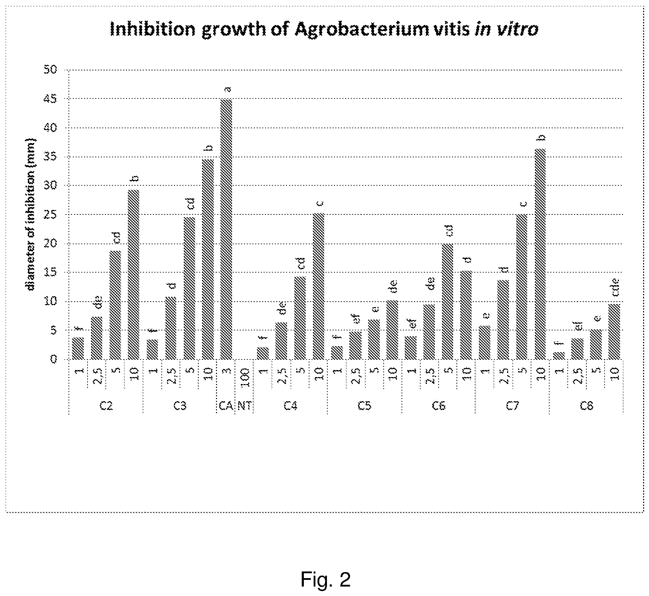

See **Fig. 2** for a schematic view of the results.

2. GREY MOULD (*Botrytis cinerea*)

The biological efficacy assessment of test agents against *Botrytis cinerea* was performed only in laboratory by a test *in vitro.* To this aim, several microscope slides were immersed in a beaker containing water agar medium and then placed into petri dishes.

The inoculum of conidia was prepared selecting three cultures (petri dishes) of *Botrytis cinerea:* 10 ml of distilled water were poured in each petri dish and smeared by a spatula over the entire surface of the mycelium. The conidia suspension obtained was filtered through a sterile plastic tube filled with fiberglass in order to separate parts of mycelium from conidia. The conidia concentration was adjusted to $1*10^6$ conidia/ml (minimum) by counting in a Thoma® chamber at the microscope (magnification 40x) eventually achieved diluting with distilled water. Once the water agar medium was solidified on the microscope slides, 50 $\mu$1 of the conidia suspension were filled on each microscope slide, over which, 50 $\mu$1 of the solution representing each factor (water, comparison agent and test agent) was added on the agar surface. Finally, the microscope slides were covered with cover slips. Six petri dishes were prepared per each factor.

The petri dishes were incubated in a humid box at 25 °C (day/night intervals 12/12). After 48 hours they were observed on the microscope (magnification 40x). The biological efficacy of the test agents was determined in terms of conidia germination, evaluating the ratio between non-germinated conidia (inactive or degenerated) and germinated conidia (active having issued the germination tube) of one hundred conidia. In the first test, the biological efficacies of the following treatments were compared after 20 hours:

- Control (water): a very high absolut number of germinated conidia was noted.
- Switch® (a.i. Cyprodinil and Fludioxonil) (0.194% p/v): a low absolut number of germinated conidia were observed;
- C1: a very low absolut number of germinated conidia were observed, the most similar effect to the Control Agent.
- C9: a low absolut number of germinated conidia were observed.

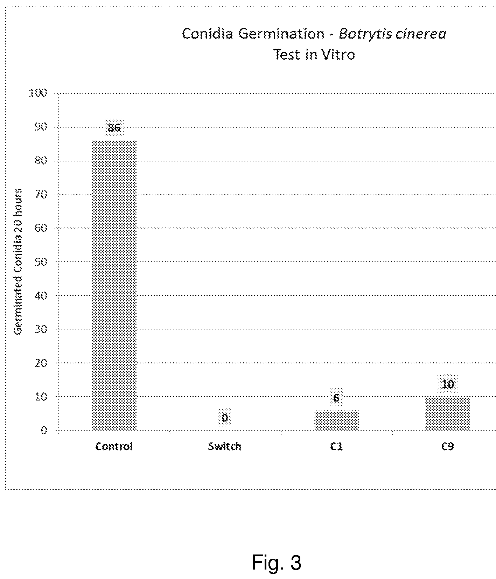

See Fig. 3 for a schematic view of the results.

In the second test, the biological efficacies of the following treatments were compared after 20 hours:

- Control (water): a very high number of germinated conidia was noted;

- Switch® (a.i. Cyprodinil and Fludioxonil) (0.194% p/v): a low number of germinated conidia were observed;
- C2: a low absolut number of germinated conidia were observed.
- C3: a very low absolut number of germinated conidia were observed, the most similar effect to the Control Agent.
- C4: a low absolut number of germinated conidia were observed.
- C5: a low absolut number of germinated conidia were observed.
- C6: a low absolut number of germinated conidia were observed.
- C7: a low absolut number of germinated conidia were observed.
- C8: a low absolut number of germinated conidia were observed.

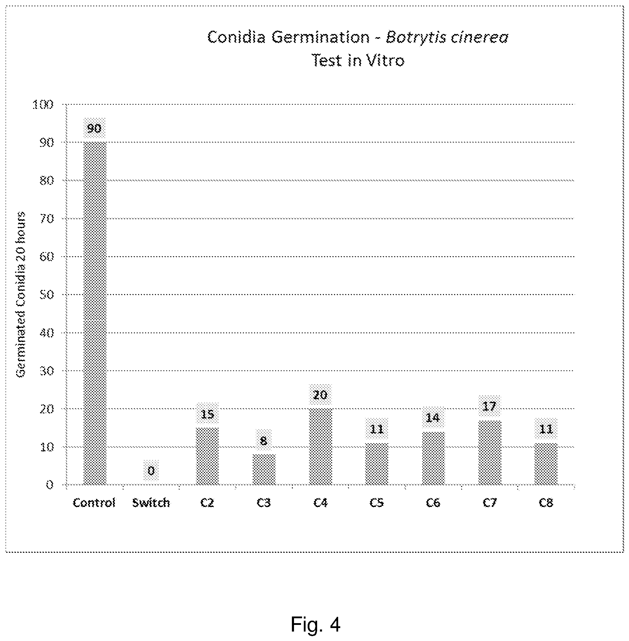

See **Fig. 4** for a schematic view of the results.

3. ESCA or GRAPEVINE TRUNK DISEASE

Samples constituted of water and based on Carbonate Hydroxyapatite (HCA) loaded with vegetal extracts were tested in vitro against the pathogens related to esca: Phaeomoniella chlamydospora, Phaeoacremonium aleophilum, Fomitiporia mediterranea.

The protocol consisted on the pathogens growth in a proper media (PDA, Difco) as untreated sample, and the same media with 3 different concentrations of the testing agents, 1.2%, 2.4% and 4.8%; and the same media with the Bordeaux mixture based on copper (p.a. 0.02%) as comparison agent.

The first day (0) each pathogen was inoculated by placing a colony (0.5 cm diam.) in the centre of petri dishes (6 cm diam.) containing the media already prepared with the testing agents. Petri dishes were closed by Parafilm and placed into an incubation chamber at $22 \pm 1°C$ alternating light/dark during the incubation period.

Per each pathogen 11 petri dishes were prepared (3 samples x 3 concentrations + 2 controls) and per one of each, 10 replications.

The measurement of the diameter of colonization was done weekly. Deducing to these values, the nominal value of 0.5 cm correspondent to the initial colony inoculated, the effective colony growth was obtained. The efficacy index per each product was calculated considering the effective fungal colony growth, applying the formula below:

$$E = \frac{[\text{value of growth (sample}^2{}_{11}) - \text{value of growth (sample1)}]}{\text{value of growth (sample1)}} \times 100$$

where sample 1 = control

In the table 1, 2 and 3, the measures of the colony growth are summarised, referred to the diameter of growth of each pathogen after the incubation period on the PDA media without any agent and add of each testing agent in 3 different concentrations and the comparison agent. Next to these, their efficacy values are reported.

In the table 1 the average diameter and the efficacy value are listed for Fomitiporia mediterranea after 7 and 14 days of incubations.

All the testing agents showed a inhibitor action on the fungal growth in all concentrations tested and during the entire period of incubation.

**Table 1.** Diameters (diam.) in cm, of Fomitiporia mediterranea (Fm) colony on PDA containing the 3 testing agents at 3 concentrations 1.2%, 2.4% and 4.8%; detecting, after 7 days and 14 days of incubation, the efficacy (E) in %. As control agents, a PDA without any agent and a PDA with an agent based on copper 0.02% p.a., were used.

| *Fm* | *control* | *comparison ag.* | | *C3* | | *C1* | | *C9* | |
|---|---|---|---|---|---|---|---|---|---|
| | *diam* | *diam* | *E* | *diam* | *E* | *diam* | *E* | *diam* | *E* |
| *1.2%* | | | | | | | | | |
| 7 days | 1.63 | 0.53 | **96.65** | 0.58 | **93.72** | 0.50 | **100** | 0.50 | **100** |
| 14 days | 5.10 | 0.75 | **93.82** | 0.70 | **89.41** | 0.50 | **100** | 0.50 | **100** |
| *2.4%* | | | | | | | | | |
| 7 days | 1.63 | 0.53 | **96.65** | 0.50 | **100** | 0.50 | **100** | 0.50 | **100** |
| 14 days | 5.10 | 0.75 | **93.82** | 0.50 | **100** | 0.50 | **100** | 0.50 | **100** |

(continued)

| 4.8% | | | | | | | | | |
|---|---|---|---|---|---|---|---|---|---|
| 7 days | 1.63 | 0.53 | **96.65** | 0.50 | **100** | 0.50 | **100** | 0.50 | **100** |
| 14 days | 5.10 | 0.75 | **93.82** | 0.50 | **100** | 0.50 | **100** | 0.50 | **100** |

In the table 2 the average diameter and the efficacy value are listed for Phaeomoniella chlamydospora (Pch) after 7, 14 and 21 days of incubations.

All the testing agents have completely inhibited the fungal growth after 7 days of incubation.

All the testing agents were efficacy at 100% against Phaeomoniella chlamydospora (Pch) at the concentration of 4.8%.

Table 2. Diameters (diam.) in cm, of Phaeomoniella chlamydospora (Pch) colony on PDA containing the 3 testing agents at 3 concentrations 1.2%, 2.4% and 4.8%; detecting, after 7, 14 and 21 days of incubation, the efficacy (E) in %. As control agents, a PDA without any agent and a PDA with an agent based on copper 0.02% p.a., were used.

| Fm | control | comparison ag. | | C3 | | C1 | | C9 | |
|---|---|---|---|---|---|---|---|---|---|
| | diam | diam | E | diam | E | diam | E | diam | E |
| 1.2% | | | | | | | | | |
| 7 days | 1.38 | 1.48 | **6.85** | 0.50 | **100** | 0.50 | **100** | 0.50 | **100** |
| 14 days | 3.01 | 2.24 | **25.91** | 0.71 | **90.05** | 0.50 | **100** | 0.50 | **100** |
| 21 days | 5.10 | 2.87 | **49.56** | 1.02 | **86.97** | 0.50 | **100** | 0.50 | **100** |
| 2.4% | | | | | | | | | |
| 7 days | 1.38 | 1.48 | **6.85** | 0.50 | **100** | 0.50 | **100** | 0.50 | **100** |
| 14 days | 3.01 | 2.24 | **25.91** | 0.54 | **99.16** | 0.50 | **100** | 0.50 | **100** |
| 21 days | 5.10 | 2.87 | **49.56** | 0.59 | **98.06** | 0.50 | **100** | 0.50 | **100** |
| 4.8% | | | | | | | | | |
| 7 days | 1.38 | 1.48 | **6.85** | 0.50 | **100** | 0.50 | **100** | 0.50 | **100** |
| 14 days | 3.01 | 2.24 | **25.91** | 0.50 | **100** | 0.50 | **100** | 0.50 | **100** |

In the **Table 3** the average diameter and the efficacy value are listed for Phaeoacremonium aleophilum (Pal), after 14, 21 and 28 days of incubations.

Table 3. Diameters (diam.) in cm, Phaeoacremonium aleophilum (Pal) colony on PDA containing the 3 testing agents at 3 concentrations 1.2%, 2.4% and 4.8%; detecting, after 7, 14, 21 and 28 days of incubation, the efficacy (E) in %. As control agents, a PDA without any agent and a PDA with an agent based on copper 0.02% p.a., were used.

| Fm | control | comparison ag. | | C3 | | C1 | | C9 | |
|---|---|---|---|---|---|---|---|---|---|
| | diam | diam | E | diam | E | diam | E | diam | E |
| 1.2% | | | | | | | | | |
| 7 days | 1.23 | 0.50 | **100** | 0.50 | **100** | 0.50 | **100** | 0.50 | **100** |
| 14 days | 2.15 | 0.50 | **100** | 0.50 | **100** | 0.50 | **100** | 0.50 | **100** |
| 21 days | 3.12 | 0.70 | **92.61** | 0.50 | **100** | 0.50 | **100** | 0.50 | **100** |
| 28 days | 4.01 | 0.97 | **81.04** | 0.50 | **100** | 0.50 | **100** | 0.50 | **100** |
| 2.4% | | | | | | | | | |
| 7 days | 1.23 | 0.50 | **100** | 0.50 | **100** | 0.50 | **100** | 0.50 | **100** |
| 14 days | 2.15 | 0.50 | **100** | 0.50 | **100** | 0.50 | **100** | 0.50 | **100** |

(continued)

| | | | | | | | | | |
|---|---|---|---|---|---|---|---|---|---|
| **2.4%** | | | | | | | | | |
| 21 days | 3.12 | 0.70 | **92.61** | 0.50 | **100** | 0.50 | **100** | 0.50 | **100** |
| 28 days | 4.01 | 0.97 | **81.04** | 0.50 | **100** | 0.50 | **100** | 0.50 | **100** |
| **4.8%** | | | | | | | | | |
| 7 days | 1.23 | 0.50 | **100** | 0.50 | **100** | 0.50 | **100** | 0.50 | **100** |
| 14 days | 2.15 | 0.50 | **100** | 0.50 | **100** | 0.50 | **100** | 0.50 | **100** |
| 21 days | 3.12 | 0.70 | **92.61** | 0.50 | **100** | 0.50 | **100** | 0.50 | **100** |
| 28 days | 4.01 | 0.97 | **81.04** | 0.50 | **100** | 0.50 | **100** | 0.50 | **100** |

In conclusion, all the three samples tested, C3, C1, C9, by the present vitro test, were efficacy against the three fungal pathogens related to Esca disease of grapevine (GTDs), inhibiting their growth in the majority thesis in comparison.

## EXAMPLES B

EXPERIMENTAL TESTS ON VINE DISEASES

| **LEGEND OF THE TESTED FORMULATIONS** All the formulations contain water, hydroxyapatite substituted with carbonate ions and/or copper and/or zinc, and functionalized with ions (K, Mg, B, Mn) and/or vegetal extracts. | |
|---|---|
| **Code** | **Functional (F) or substituent (S) substances (g/kg formulation)** |
| C1 | Cu = 50 (S); Zn (S) = 18 ; mix of vegetal extracts = 30 (F) |
| C2 | Vegetal extract of Lemon = 30 (F) |
| C3 | Vegetal extract of Cloves = 30 (F) |
| C4 | Vegetal extract of Peppermint = 30 (F) |
| C5 | Vegetal extract of Thyme = 30 (F) |
| C6 | Vegetal extract of Rosemary = 30 (F) |
| C7 | Vegetal extract of Garlic = 30 (F) |
| C8 | Vegetal extract of Cinnamon = 30 (F) |
| C9 | mix of vegetal extracts = 30 (F) |
| T1 | Cu [sulphate] = 35 (F); Zn (F) = 18 ; mix of vegetal extracts = 30 (F) |
| T2 | Cu [sulphate tribasic] = 35 (F); Zn (F) = 18 ; mix of vegetal extracts = 30 (F) |
| T3 | Cu [oxychloride] = 35 (F); Zn (F) = 18 ; mix of vegetal extracts = 30 (F) |
| T4 | Cu [hydroxide] = 35 (F); Zn (F) = 18 ; mix of vegetal extracts = 30 (F) |
| MS | Hydroxyapatite substituted with carbonate ions = 120 |

## 1. INTRODUCTION

Several formulations based on hydroxyapatite substituted with carbonate ions and/or copper and/or zinc, and functionalized with vegetal extracts were tested *in vitro* and *in vivo* against grapevine pathogens.

13

2. GREY MOULD (*Botrytis cinerea*) and ESCA or GRAPEVINE TRUNK DISEASE

Samples constituted of water and based on Carbonate Hydroxyapatite (HCA) loaded with vegetal extracts were tested in vitro against the pathogens related to esca and grey mould: Phaeomoniella chlamydospora, Phaeoacremonium aleophilum, Botrytis cinerea. The protocol consisted on the pathogens growth in a proper media (MEA - Malt Extract Agar) as untreated sample, and the same media with 4 different concentrations of the testing agents, 0,6%, 1.2%, 2.4% and 4.8.

The fungal growth was measured, in the diametrical direction, from the inoculation point. The measurement was expressed in mm. Given the excessive growth difference of the three tested fungi, the measurements were set differently: Botrytis cinerea, with rapid growth, it was monitored every 24 hours for the first five days, at the end of which the control had completely filled the plate, while Phaeoacremonium aleophilum and Phaeomoniella chlamydospora were observed every 7 days for four weeks (then at 7, 14, 21 and 28 days).

Subtracting to the values, the diametric value 0.7 mm, corresponding to the initial inoculum, it was determined the actual growth of the colony; however, the effectiveness of the single product was calculated observing (Moghaddam et al, 2014) the percentage of growth inhibition compared to the control (abbreviated % IG), by the formula:

$$\% \, IG = [\text{Growth value inoculated sample - Growth value control}] / \text{Growth value control}$$

In order to improve the information on the data relating to the effect of these treatments were subjected to analysis of variance (ANOVA) and the significance of the differences between the averages of the treatments was tested by the Tukey's HSD Test. The package used for the ' Statistical analysis of the results was 10 version developed by StatSoft. Inc., Tulsa, OK 74104 USA.

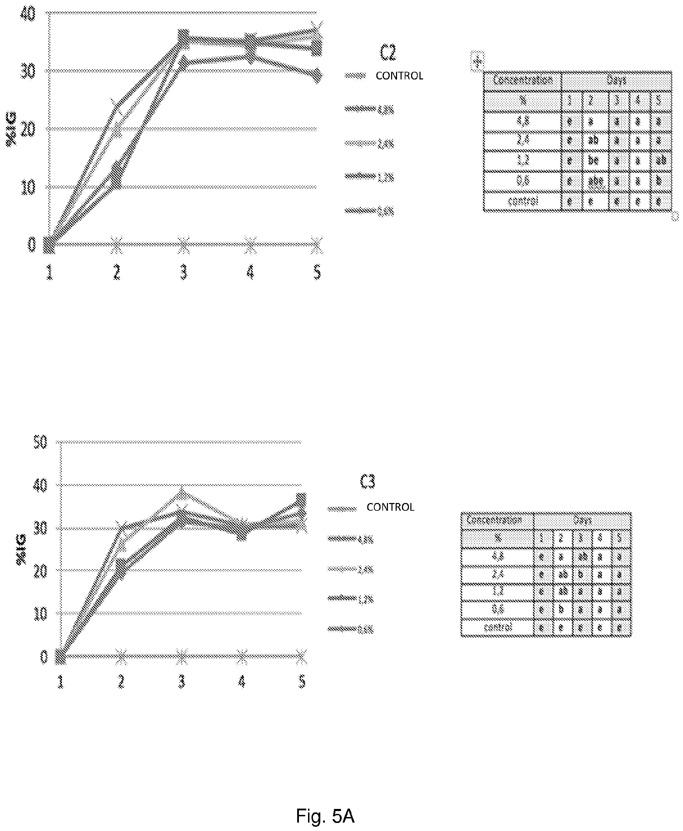

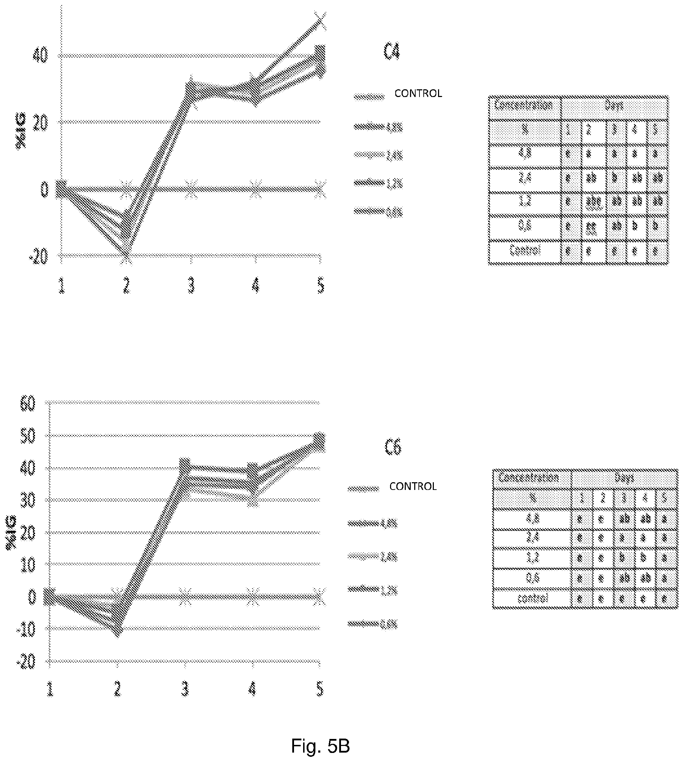

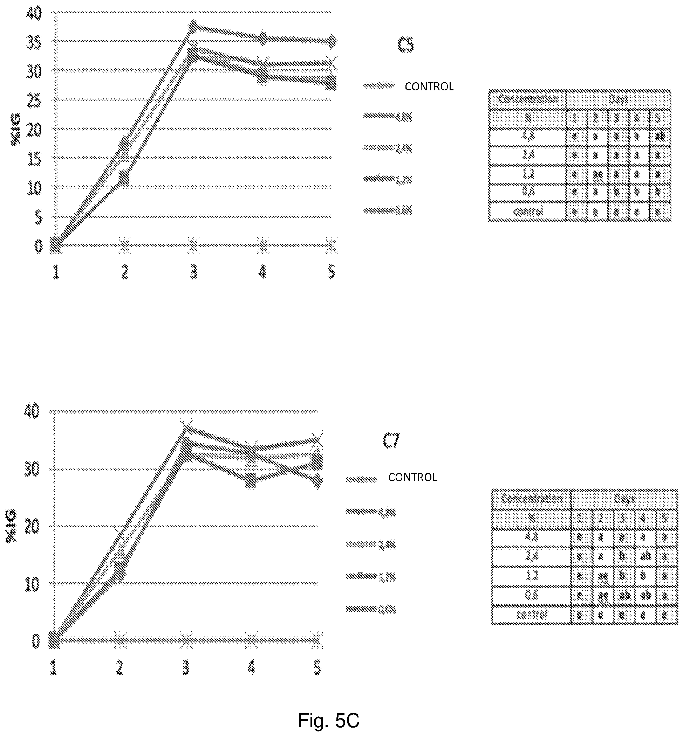

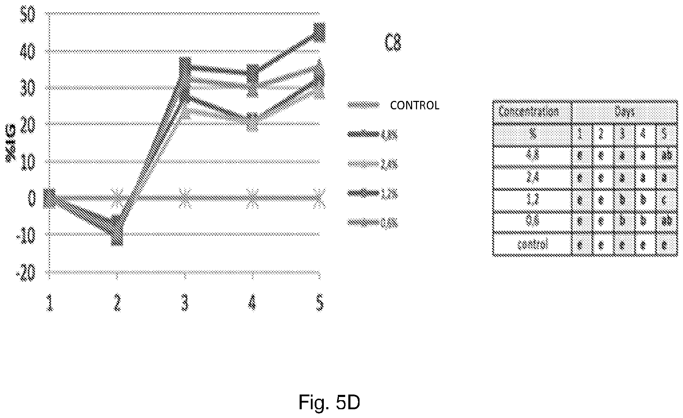

Results on GREY MOULD (*Botrytis cinerea*) - Figures 5A-D

The treatment with C8 shows a statistically significant inhibitory effect from the 2nd day at all concentrations. The sample C4 showed a similar control to the previous extract, showing also in this case, to inhibit the growth of the fungus over 40%.

The treatment C6, also shows an inhibitory effect, from the 2nd day. The treatment with C3 proves to have a inhibitory effect of growth already at the 2nd day for all concentrations, which was not the case in previous treatments. It is observed that treatments C5 and C7 have an inhibitory effect on the fungus that is, as in the case C7, statistically significant at the 2nd day. The treatment C2 inhibits significantly the fungus from the 3rd day.

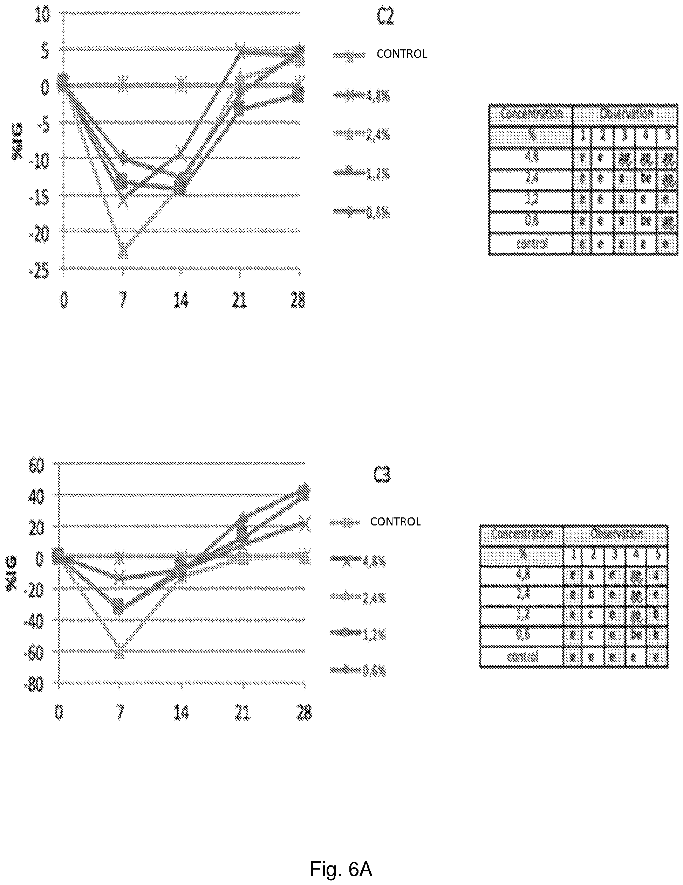

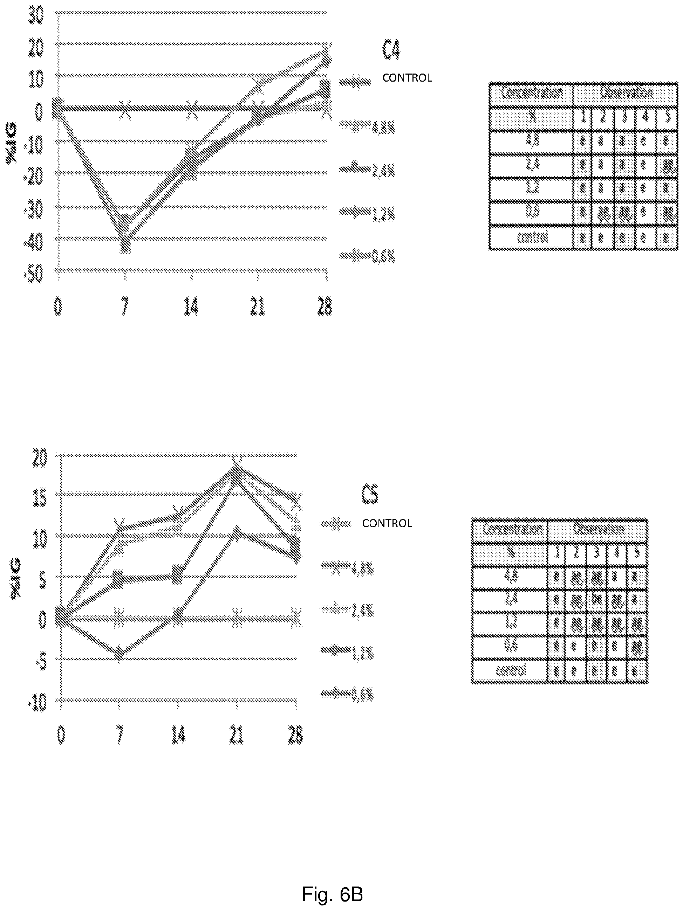

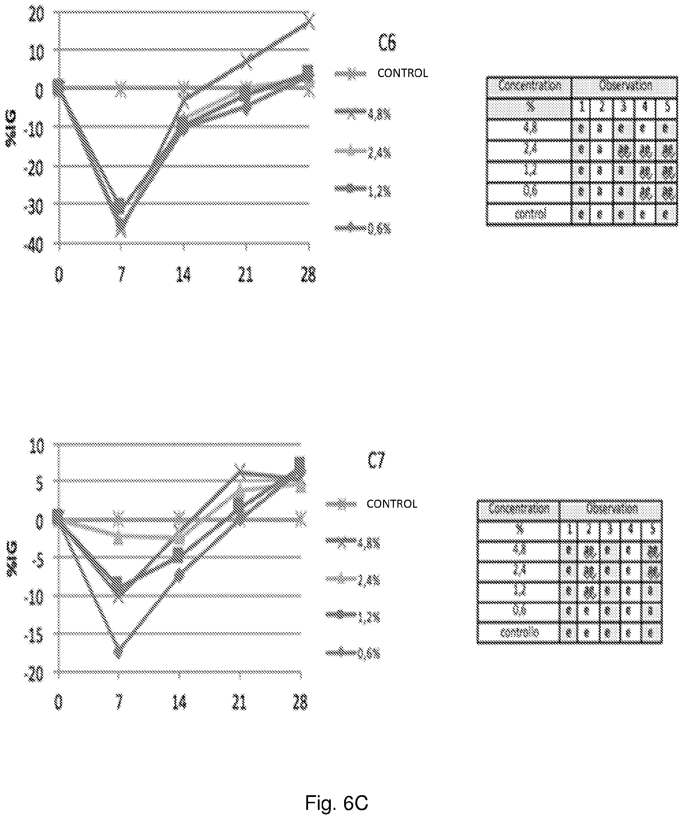

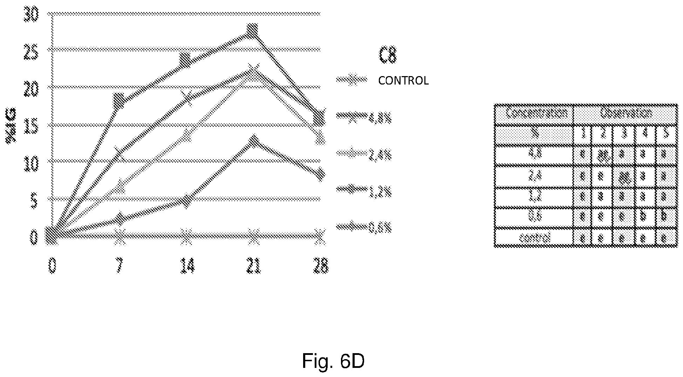

Results ESCA (*Phaeomoniella chlamydospora*) - Figures 6A-D

Treatment C8 has an inhibitory effect, for the very high concentrations, already at day 7. This effect increases with time coming, for the 1.2% concentration, by day 2, at 27%. C4 and C6 show a probiotic effect, immediately observed at day 7, which tends to decrease during the test reporting day 21. About treatment C3, on the 28th day, it has an inhibitory effect, which also exceeds 40%, for the concentrations 4.8%, 1.2% and 0.6%. Treatment C7 shows a similar trend to the previous treatment. Treatment C5 showed a development equal in the first 14 day, the inhibition effect was seen only for the highest concentrations of 4.8% and 2.4%. Treatment C2 showed an inhibitory effect of about 5% toward the end of the growth that could be indicate a long-term effect. Globally the treatments revealed a probiotic effect in the short-time period then followed by a progress inhibition of the fungi in the long-time period: this confirm the nutraceutical role of the vegetal extract, here amplified by the combination with HCA.

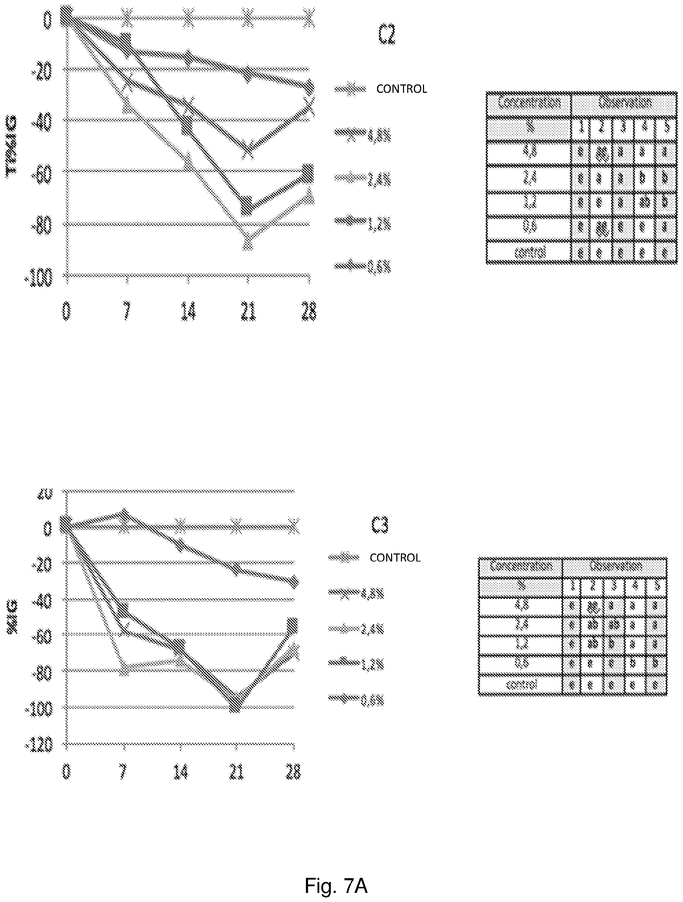

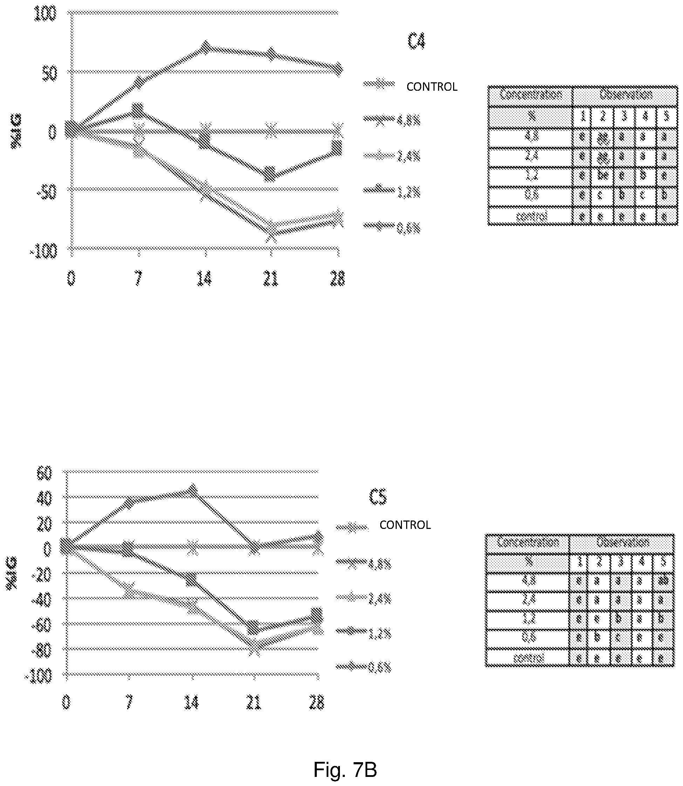

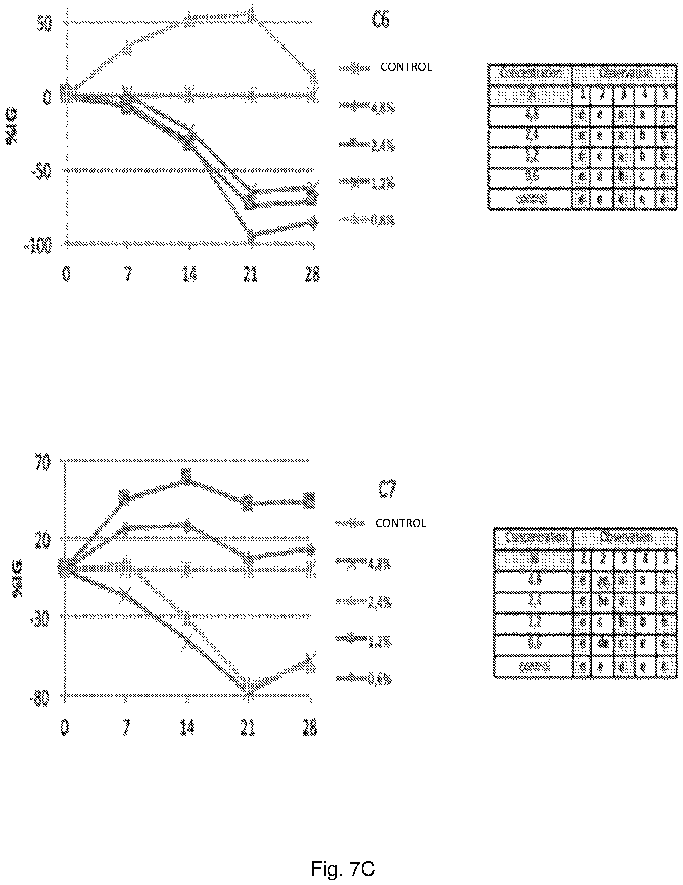

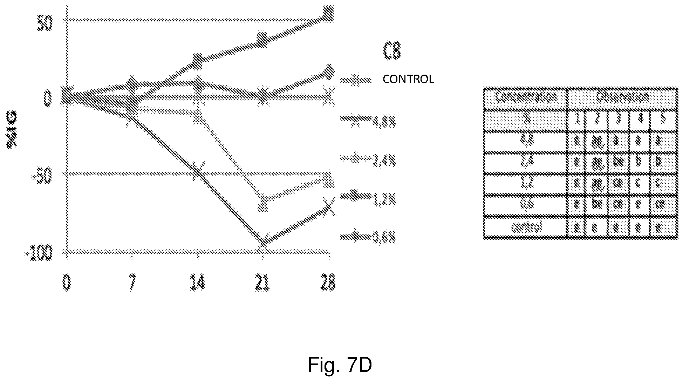

Results ESCA (*Phaeoacremonium aleophilum*) - Figures 7A-D

Treatment C8 revealed a probiotic effect from day 14 for the very high concentrations, at day 21, while for the 1.2% a constant inhibitory effect was reported. The same trend was also reported by the treatment C4 and C6, at the concentration of 0.6%. For the treatment C3, the concentration 0.6% departs from the others assuming an initial inhibition then turned into a probiotic effect. The concentration 1,2%, of the treatment C7, inhibits the fungus up to 56% IG at day 14, while the treatment C5, at concentration 0.6%, has an inhibitory effect immediately but that tends to decrease over time. About the treatment C2, it is noted that all concentrations induce a probiotic effect, which increases up to 21 days after which the highest concentrations decrease this effect. As reported for Phaeomoniella chlamydospora, the general short-term probiotic effect noted for high concentrations of the treatments, confirms the nutraceutical role of the vegetal extracts, in controlling the growth of the fungi in the long-term period, without destroying the fungal cell (as some synthetic fungicide act) but interfering with its fertility in the time.

3. DOWNY MILDEW (*Plasmopara viticola*)

Samples constituted of water and based on Carbonate Hydroxyapatite (HCA) loaded with several copper salts (sulphate, tribasic sulphate, oxychloride, hydroxide), zinc sulphate and vegetal extracts were tested in vivo against Plasmopara viticola.

The greenhouse test was performed to evaluate the protective efficacy of the test agents applied at the concentration of 1% v/v. To conduct this test, 6 potted vines were employed per each treatment: control (water), comparison agent and test agents. Potted vines were selected for adequate height, good health status and number of unfolded leaves (minimum five). They were prepared for the treatment, tying the shoot just above the first five leaves eligible for the final disease assessment.

On day "1" potted vines were treated with a handle sprayer and after 24 hours the inoculation of the fungal pathogen was performed on the treated plants. The inoculum was prepared collecting leaves with fresh and prominent symptoms of Plasmopara viticola from infected potted vines grown in the greenhouse. Infected leaves were washed by water, manually sprayed on the low surface, in order to get an aqueous solution rich in sporangia. Sporangia concentration was adjusted in a Thoma® chamber at the microscope (magnification 40x), to $1*10^6$ sporangia/ml (minimum). The sporangia suspension was sprayed manually on the treated plants taking care to wet the lower surface of the five leaves below the tying point of the shoot homogeneously.

After inoculation, the table with potted vines was covered with a black plastic tarp and left in the cellar for the first day of incubation. In order to evaluate the curative efficacy of the test agents, inoculation with P. viticola was conducted at the first day and after 24 hours of incubation the treatments were performed (once the surface of the leaves was as dry as possible). The third day, the treated, inoculated and incubated plants were uncovered and transferred and cultivated into the greenhouse under controlled growth conditions.

The eighth day, potted vines were abundantly wet, spraying water on the foliage, then, they were covered again with a black plastic tarp and transferred into the cellar to favour sporulation.

After 24 hours, the plants were uncovered. The disease severity was determined by observing the five leaves below the tying point of the shoot in each potted vine.

In order to improve the information on the data relating to the effect of these treatments were subjected to analysis of variance (ANOVA) and the significance of the differences between the averages of the treatments was tested by the Tukey's HSD Test. The package used for the ' Statistical analysis of the results was 10 version developed by StatSoft. Inc., Tulsa, OK 74104 USA.

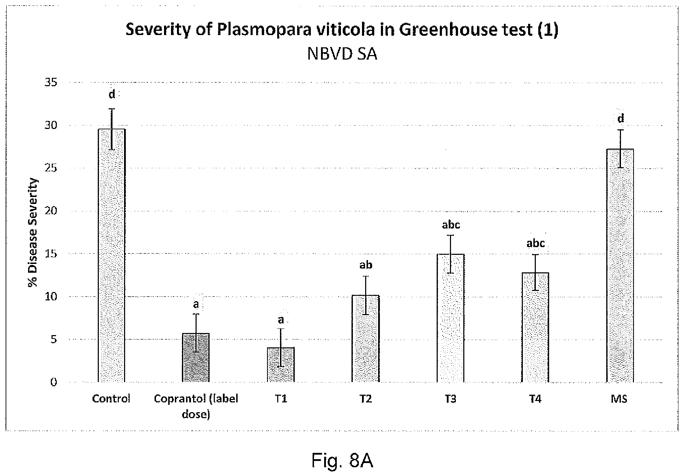

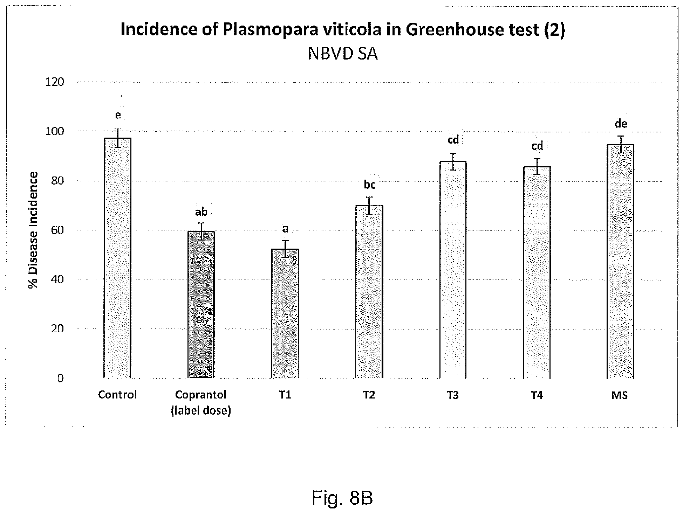

Results on DOWNY MILDEW (*Plasmopara viticola*) - Figures 8A-D

As reported by the Figures 4, the test was considering highly significant due to the high disease expression by the control.

The pure HCA did not interfere significantly the fungal growth, even if in absolute value, the treatment MS showed a disease severity lower than the control.

While HCA with each one of the four copper salts combined with zinc sulphate and vegetal extracts revealed a good control of the fungal growth: the disease severity was particularly low in the plants treated with T1 and T2. Both ones showed also the lowest disease incidence if compared with the control agent (Coprantol®). The disease was partially controlled by T3 and T4.

Globally the test revealed a very good performance for T1 and T2 on the Plasmopara viticola control, in vivo test.

**Claims**

**1.** Use of a carbonate-substituted hydroxyapatite having the following formula:

$$Ca_{(10)}(PO_4)_{(6-y)}(CO_3)_y(OH)_2$$

wherein y is comprised between 0.002 and 2, in combination with at least one bioactive substance selected from the group consisting of an ion of Mn, Mg, K, Fe and B and/or a plant extract selected from the group consisting of an extract of: lignin, mint, thyme, rosemary, sesame, soya, *cloves, garlic, lemon, cinnamon, Abies sibirica, Malpighia glabra, Achillea millefolium, Allium sativum, Medicago sativa, Aloe vera Citrus sinensis, Artemisia annua, Arnica Montana, Ocimum basilicum, Betula pendula, Betula pubescens, Calendula officinalis, Matricaria chamomilla, Chamaemelum nobile, Cinnamomum verum, Centella asiatica, Chelidonium majus, Syzygium aromaticum, Allium cepa, Equisetum arvense, Curcuma longa, Echinacea purpurea, Echinacea angustifolia, Eucalyptus globulus, Hypericum perforatum, Fucus vesiculosus, Gentiana lutea, Lavandula angustifolia, Citrus limon, Melilotus officinalis,*

*Melissa officinalis, Punica granatum, Mentha piperita, Vaccinium myrtillus, Orthosiphon stamineus, Urtica dioica, Olea europeae, Tabebuia impetiginosa, Plantago lanceolata, Hieracium pilosella, Pinus sibirica, Polypodium leucotoms, Citrus paradise, Quassia amara, Rheum Thais, Rosa canina, Rosmarinus officinalis, Ruscus aculeatus, Salix alba, Salvia officinalis, Camelia sinensis, Tilia tomentosa, Thymus vulgaris, Arctostaphylos uva-ursi, Valeriana officinalis, Solidago virgaurea, Loranthus europaeus* and *Zingiber officinale,*
*wherein the bioactive substance is adsorbed on the substituted hydroxyapatite, for the phytosanitary and/or nutritional treatment of the plants.*

2. The use according to claim 1, wherein the carbonate-substituted hydroxyapatite is in the form of an aggregate of carbonate-substituted hydroxyapatite particles, wherein the aggregate has a size comprised between 0.5 and 5 $\mu$m.

3. The use according to claim 1 or 2, wherein the plant extract is in the form of a powder or an alcoholic or hydro-alcoholic solution.

4. The use according to any one of claims 1 to 3, wherein the carbonate-substituted hydroxyapatite in combination with at least one bioactive substance is comprised in a composition in a quantity of 5-70% in relation to the total weight of dry material of the composition.

5. The use according to any one of claims 1 to 4, wherein the plants are grapevines, tomato plant (Solanum lycopersicum), wheat (Triticum spp), pear tree (Pyrus spp), apple tree (Malus domestica), olive tree (Olea europaea), kiwifruit (Actinia spp) and vegetable plants, preferably lettuce, spinach, cucurbits, onion, leek, peas.

6. The use according to any one of claims 1 to 5, wherein the bioactive substance has an anti-parasite activity, preferably against cryptogams, bacteria, fungi, phytoplasma and insects and/or a nutritional activity as fertilizer or growth enhancer.

7. The use according to any one of claims 1 to 6, wherein the anti-parasite activity of the bioactive substance is for the prevention and treatment of downey mildew (caused by Plasmopara viticola), powdery mildew (caused by Erysiphe nectar), Grey mould (caused by Botrytis cinerea), black rot (caused by Guignardia bidwellii), grapevine crown gall (caused by Agrobacterium vitis), grapevine trunk diseases or esca (caused by Botryosphaeriaceae, Phaeomoniella chlamydospora, Phaeoacremonium aleophilum, Fomitiporia mediterranea) late blight of tomatoes (caused by Phytophthora infestans), fusarium head blight of wheat (caused by Fusarium graminearum and Fusarium culmorum), apple scab (caused by Venturia inaequalis), pear scab (caused by Venturia pirina), brown spot of pear (caused by Stemphylium vesicarium), Lettuce mildew (caused by Bremia lactucae), Spinach mildew (caused by Peronospora spinaceae), Cucurbits mildew (caused by Pseudoperonospora cubensis on cantaloupe, cucumber, pumpkin, squash and watermelon), Onion mildew (caused by Peronospora schleideni), Leek mildew (caused by Phytophtora porri), Peas mildew (caused by Peronospora pisi), diseases caused by the insects: European grapevine moths (Eupoecilia ambiguella) and vine mealybug (Planococcus ficus).

**Patentansprüche**

1. Verwendung eines karbonat-substituierten Hydroxylapatits der folgenden Formel:

$$Ca_{(10)}(PO_4)_{(6-y)}(CO_3)_y(OH)_2$$

wobei y zwischen 0,002 und 2 beträgt und in Kombination mit zumindest einer bioaktiven Substanz ausgewählt aus der Gruppe bestehend aus Mn-, Mg-, K-, Fe-, und B-Ionen und / oder einem Pflanzenextrakt ausgewählt aus der Gruppe bestehend aus einem Extrakt von:
Lignin, Minze, Thymian, Rosmarin, Sesam, Soja, Nelken, Knoblauch, Zitrone, Zimt, Abies sibirica, Malpighia glabra, Achillea millefolium, Allium sativum, Medicago sativa, Aloe vera Citrus sinensis, Artemisia annua, Arnica montana, Ocimum basilicum, Betula pendula, Betula pubescens, Calendula officinalis, Matricaria chamomilla, Chamaemelum nobile, Cinnamonum verum, Centella asiatica, Chelidonium majus, Syzgium aromaticum, Allium cepa, Equisetum arvense, Curcuma longa, Echinacea purpurea, Echinacea angustifolia, Eucalyptus globulus, Hypericum perforatorum, Fucus vesiculosus, Gentiana lutea, Lavandula angustifolia, Citrus limon, Melilotus officinalis, Melissa officinalis, Punica granatum, Mentha piperita, Vaccinium myrtillus, Orthosiphon stamineus, Urtica dioica, Olea europeae, Tabebuia impetiginosa, Plantago lanceolata, Hieracium pilosella, Pinus sibirica, Polypodium leucotoms, Citrus paradise, Quassia amara, Rheum Thais, Rosa canina, Rosmarinus officinalis, Ruscus aculeatus, Salix alba, Salvia officinalis, Camelia sinensis, Tilia tomentosa, Thymus vulgaris, Arctostaphylos uva-ursi, Valeriana officinalis, Solidago virgaurea, Loranthus europaeus und Zingiber officinale vorliegt, wobei die bioaktive Substanz für die pflanzengesundheitliche und / oder nutritionelle Behandlung der Pflanzen auf dem substituierten Hydroxylapatit adsorbiert ist.

2. Verwendung gemäß Anspruch 1, wobei das karbonat-substituierte Hydroxylapatit in Form eines Aggregats von karbonat-substituierten Hydroxylapatit-Partikeln vorliegt, wobei das Aggregat eine Größe zwischen 0,5 und 5 $\mu$m aufweist.

3. Verwendung gemäß Anspruch 1 oder 2, wobei der Pflanzenextrakt in Form von Pulver oder einer alkoholischen oder hydro-alkoholischen Lösung vorliegt.

4. Verwendung gemäß einem der Ansprüche 1 bis 3, wobei das karbonat-substituierte Hydroxylapatit in Kombination mit zumindest einer bioaktiven Substanz in einer Zusammensetzung in einer Menge von 5 - 70% im Verhältnis zum Gesamtgewicht des Trockenmaterials der Zusammensetzung vorliegt.

5. Verwendung gemäß einem der Ansprüche 1 bis 4, wobei die Pflanzen Weinreben, Tomatenpflanzen (Solanum lycopersicum), Weizen (Triticum spp), Birnbaum (Pyrus spp), Apfelbaum (Malus domestica), Olivenbaum (Olea europaea), Kiwi (Actinia spp) und Gemüsepflanzen, bevorzugt Salat, Spinat, Kürbisgewächse, Zwiebel, Lauch, Erbsen, sind.

6. Verwendung gemäß einem der Ansprüche 1 bis 5, wobei die bioaktive Substanz eine antiparasitäre Wirkung hat, bevorzugt gegen Kryptogame, Bakterien, Pilze, Phytoplasma und Insekten und / oder eine nutritionelle Wirkung als Dünger oder Wachstumsbeschleuniger.

7. Verwendung gemäß einem der Ansprüche 1 bis 6, wobei die antiparasitäre Wirkung der bioaktiven Substanz zur Vorbeugung und Behandlung von falschem Mehltau (verursacht durch Plasmopara viticola), echtem Mehltau (verursacht durch Erysiphe nectar), Grauschimmel (verursacht durch Botrytis cinerea), Schwarzfäule (verursacht durch Guignardia bidwellii), Weinrebenkronengalle (verursacht durch Agrobacterium vitis), Holzkrankheiten der Weinrebe oder Esca (verursacht durch Botryosphaeriaceae, Phaeomoniella chlamydospora, Phaeoacremonium aleophilum, Fomitiporia mediterranea), Tomatenfäule (verursacht durch Phytophthora infestans), Ährenfusariose von Weizen (verursacht durch Fusarium graminearum und Fusarium culmorum), Apfelschorf (verursacht durch Venturia inaequalis), Birnenschorf (verursacht durch Venturia pirina), Braunfleckigkeit bei Birnen (verursacht durch Stemphylium vesicarium), Salatmehltau (verursacht durch Bremia lactucae), Spinatmehltau (verursacht durch Peronospora spinaceae), Kürbisgewächsmehltau (verursacht durch Pseudoperonospora cubensis auf Cantaloupe-Melone, Gurke, rundem Kürbis, ovalem Kürbis und Wassermelone), Zwiebelmehltau (verursacht durch Peronospora schleideni), Lauchmehltau (verursacht durch Phytophthora porri), Erbsenmehltau (verursacht durch Peronospora pisi), Krankheiten, die von den Insekten europäischer Traubenwickler (Eupoecilia ambiguella) und Weinwollaus (Planococcus ficus) verursacht werden, dient.

**Revendications**

1. Utilisation d'une hydroxyapatite substituée par des carbonates ayant la formule suivante :

$$Ca_{(10)}(PO_4)_{(6-y)}(CO_3)_y(OH)_2$$

dans laquelle y est compris entre 0,002 et 2, en combinaison avec au moins une substance bioactive sélectionnée parmi le groupe constitué d'un ion de Mn, Mg, K, Fe et B et/ou un extrait végétal sélectionné parmi le groupe constitué d'un extrait de : lignine, menthe, thym, romarin, sésame, soja, *clous de girofle, ail, citron, cannelle, Abies sibirica, Malpighia glabra, Achillea millefolium, Allium sativum, Medicago sativa, Aloe vera Citrus sinensis, Artemisia annua, Amica Montana, Ocimum basilicum, Betula pendula, Betula pubescens, Calendula officinalis, Matricaria chamomilla, Chamaemelum nobile, Cinnamomum verum, Centella asiatica, Chelidonium majus, Syzygium aromaticum, Allium cepa, Equisetum arvense, Curcuma longa, Echinacea purpurea, Echinacea angustifolia, Eucalyptus globulus, Hypericum perforatum, Fucus vesiculosus, Gentiana lutea, Lavandula angustifolia, Citrus limon, Melilotus officinalis, Melissa officinalis, Punica granatum, Mentha piperita, Vaccinium myrtillus, Orthosiphon stamineus, Urtica dioica, Olea europeae, Tabebuia impetiginosa, Plantago lanceolata, Hieracium pilosella, Pinus sibirica, Polypodium leucotoms, Citrus paradise, Quassia amara, Rheum Thais, Rosa canina, Rosmarinus officinalis, Ruscus aculeatus,*

*Salix alba, Salvia officinalis, Camelia sinensis, Tilia tomentosa, Thymus vulgaris, Arctostaphylos uva-ursi, Valeriana officinalis, Solidago virgaurea, Loranthus europaeus* et *Zingiber officinale,*
dans laquelle la substance bioactive est absorbée sur l'hydroxyapatite substituée, pour le traitement phytosanitaire et/ou nutritionnel des plantes.

2. Utilisation selon la revendication 1, dans laquelle l'hydroxyapatite substituée par des carbonates est sous forme d'un agrégat de particules d'hydroxyapatite substituée par des carbonates, dans laquelle l'agrégat a une dimension comprise entre 0,5 et 5 $\mu$m.

3. Utilisation selon la revendication 1 ou 2, dans laquelle l'extrait végétal est sous forme d'une poudre ou d'une solution alcoolique ou hydroalcoolique.

4. Utilisation selon l'une quelconque des revendications 1 à 3, dans laquelle l'hydroxyapatite substituée par des carbonates en combinaison avec au moins une substance bioactive est comprise dans une composition dans une quantité de 5-70 % par rapport au poids total de matière sèche de la composition.

5. Utilisation selon l'une quelconque des revendications 1 à 4, dans laquelle les plantes sont la vigne, la tomate (Solanum lycopersicum), le blé (Triticum spp), le poirier (Pyrus spp), le pommier (Malus domestica), l'olivier (Olea europaea), le kiwi (Actinia spp) et les plantes potagères, de préférence la laitue, les épinards, les cucurbitacées, l'oignon, le poireau, les pois.

6. Utilisation selon l'une quelconque des revendications 1 à 5, dans laquelle la substance bioactive a une activité antiparasitaire, de préférence contre des cryptogames, bactéries, champignons, phytoplasmes et insectes et/ou une activité nutritionnelle comme engrais ou stimulateur de croissance.

7. Utilisation selon l'une quelconque des revendications 1 à 6, dans laquelle l'activité antiparasitaire de la substance bioactive est pour la prévention et le traitement de mildiou (causé par Plasmopara viticola), oïdium (causé par le nectar d'Erysiphe), moisissure grise (causée par Botrytis cinerea), pourriture noire (causée par Guignardia bidwellii), galle du collet de la vigne (causée par Agrobacterium vitis), maladies du tronc de la vigne ou esca (causées par Botryosphaeriaceae, Phaeomoniella chlamydospora, Phaeoacremonium aleophilum, Fomitiporia mediterranea), brûlure tardive des tomates (causée par Phytophthora infestans), fusariose de l'épi du blé (causée par Fusarium graminearum et Fusarium culmorum), tavelure du pommier (causée par Venturia inaequalis), tavelure du poirier (causée par Venturia pirina), tache brune du poirier (causée par Stemphylium vesicarium), mildiou de la laitue (causé par Bremia lactucae), mildiou des épinards (causé par Peronospora spinaceae), mildiou des cucurbitacées (causé par Pseudoperonospora cubensis sur le cantaloup, le concombre, le potiron, la courge et la pastèque), mildiou de l'oignon (causé par Peronospora schleideni), mildiou du poireau (causé par Phytophtora porri), mildiou des pois (causé par Peronospora pisi), maladies causées par les insectes : pyrales de la vigne (Eupoecilia ambiguella) et la cochenille de la vigne (Planococcus ficus).

Fig. 1

Fig. 2

Fig. 3

Fig. 4

Fig. 5A

Fig. 5B

Fig. 5C

Fig. 5D

Fig. 6A

Fig. 6B

Fig. 6C

Fig. 6D

Fig. 7A

Fig. 7B

Fig. 7C

EP 3 297 433 B1

Fig. 7D

34

**Severity of Plasmopara viticola in Greenhouse test (1)**
NBVD SA

Fig. 8A

**Incidence of Plasmopara viticola in Greenhouse test (2)**
NBVD SA

Fig. 8B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0640284 A
- RO 122830

- JP H0556105 B